# EUROPEAN PATENT APPLICATION

(11) **EP 2 779 056 A1**
(43) Date of publication of application: **17.09.2014**
(21) Application number: 14159413.5
(22) Date of filing: 13.03.2014
(51) Int. Cl.: G06Q 10/10

(54) **Automated business system generation**

(30) Priority: 15.03.2013 US 201313837815
(71) Applicant: Apptio, Inc., Bellevue, WA 98004 (US)
(72) Inventor: Schafer, Zane, Bellevue, WA 98004 (US); Purpus, Eric, Bellevue, WA 98004 (US); Allison, Scott, Bellevue, WA 98004 (US)
(74) Representative: Carter, Stephen John

(57) **Abstract**

Various embodiments are directed towards determining a total cost for providing the at least one offering. At least one dataset provided by at least one external data source is mapped to one or more fields in at least one dataset template. Further, the at least one dataset mapped to the at least one dataset template includes information related to providing at least one offering, such as cost data. At least one category template is employed to allocate the mapped dataset information to a plurality of categories. Also, each of the plurality of categories may be allocated a percentage of the mapped dataset information values. Additionally, a total cost value is generated for providing the at least one offering and a model for determining the total cost value of the at least an offering based at least on the allocation to at least one category.

## Description

### TECHNICAL FIELD

The present invention relates generally to computer automated activity based budgeting, forecasting and cost management and accounting, and more particularly, but not exclusively to automating the business management processes associated with cost management, such as budgeting and financial modeling.

### BACKGROUND

Businesses that strive to remain viable and successful in today's competitive commercial environment are required to adopt accurate and responsive cost management practices. To improve efficiency, businesses use financial models that apply modern budgeting, forecasting and cost accounting techniques. For some accounting and cost management techniques, the complexity of the financial allocation model may increase as the number of tracked activities and elements increases. Therefore, for larger enterprises, sophisticated computer programs and computing devices are often required to assist in generating useful and relevant cost information based on financial allocation models.

In some cases, the large number of items and entities required for financial modeling can make development of modeling applications difficult. Further, the size and complexity of a financial allocation models can make it difficult to design allocation rules for the cost allocations between groups and/or items within the model. Historically, the size and complexity of these financial allocation models have made it difficult to accurately ascertain a total cost of ownership for an offering such as a product and/or service. Thus, it is with respect to these considerations and others that the invention has been made.

### BRIEF DESCRIPTION OF THE DRAWINGS

Non limiting and non exhaustive embodiments of the present invention are described with reference to the following drawings. In the drawings, like reference numerals refer to like parts throughout the various figures unless otherwise specified. For a better understanding of the present invention, reference will be made to the following Description of the Various Embodiments, which is to be read in association with the accompanying drawings, wherein:
FIGURE 1 illustrates a system diagram showing components of an environment in which at least one of the various embodiments may be practiced;
FIGURE 2 shows one embodiment of a client device that may be included in a system;
FIGURE 3 illustrates one embodiment of a network device that may be included in a system;
FIGURE 4 shows one embodiment of a model for automatically generated business system;
FIGURE 5 illustrates a table that may include dataset information;
FIGURE 6 shows a logical architecture of a model for an automatically generated business system;
FIGURE 7 illustrates a user interface for assignment allocations;
FIGURE 8 shows an overview flowchart for a process for automatically publishing a total cost value and a model for an offering by a system;
FIGURE 9 illustrates a flowchart for a process for mapping dataset fields to categories and allocating costs in accordance with at least one of the various embodiments; and
FIGURE 10 show an exemplary schematic arrangement for a cost category template in accordance with the various embodiments.

### DESCRIPTION OF THE VARIOUS EMBODIMENTS

The present invention now will be described more fully hereinafter with reference to the accompanying drawings, which form a part hereof, and which show, by way of illustration, specific embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

Throughout the specification and claims, the following terms take the meanings explicitly associated herein, unless the context clearly dictates otherwise. The phrase "In one of the embodiments" or "in at least one of the various embodiments" as used herein does not necessarily refer to the same embodiment, though it may. Furthermore, the phrase "in another embodiment" as used herein does not necessarily refer to a different embodiment, although it may. Thus, as described below, various embodiments of the invention may be readily combined, without departing from the scope or spirit of the invention.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "Financial allocation model," and "cost model" refers to a graph based representation of a system of financial allocation rules that can be used for costing actual expenditures (for management accounting) or budgeting future expenditures. Nodes in the model may represent classes of items that may be associated with costs and/or expenses. The edges of the graph may represent how the costs and/or expenses may be allocated between the nodes. A financial allocation model may be a visual rendering of a graph showing the nodes and the edges connecting the nodes.

As used herein, the term "Cost line item," refers to a single line item in a dataset comprised of cost related data, such as a general ledger (or finance allocation model) and its associated cost/expense. For example, the costs associated with a particular computer that is an email server may be a single item having a particular cost (e.g., the email server may correspond to a cost line item).

As used herein, the term "Category," refers to a set and/or class of cost line items that may be grouped together. Also, dataset information in fields of a dataset template may be mapped to one or more categories in a category template. For example, a collection of computers performing services such as email, web serving, enterprise resource planning, may represent separate cost line items and they may be grouped into the Servers category.

As used herein, the terms "Allocation rules," "entity propagation rules," or "propagation rules" refer to rules in the financial allocation model that determine how the costs/expenses from a category are allocated between/among other categories. Also, such rules may be assigned to individual cost line items. For example, if an email server cost line item has a value of $1000 an allocation or entity propagation rule may be defined such that 50% of the expense may be allocated to the Marketing department and 50% may be allocated to the Engineering department. Also, allocation rules may be applied at the category as well as the cost line item level.

As used herein, the term "Assignment ratios," refers to an allocation rule, or the results of applying one or more rules, of the distribution ratio of costs to cost line items or categories. For example, if $1000 may be allocated to Servers category, and the cost line item Email Server is allocated $800 and the cost line item FTP Server is allocation $200, the assignment ratios may be determined to 80% to budget item line Email Server and 20% to cost line item FTP Server. Assignment ratios may be explicitly defined by allocation rules. Or they may be derived from the allocation tables by converting the values into ratios of the total allocation to the category.

As used herein, the terms "business system" and/or "generated business system," refers to a system that has been generated using the cost management platform. Various embodiments disclosed herein may be related to financial applications. But, one of ordinary skill the art will appreciate that generated business systems are not limited to financial applications.

As used herein, the term "external data source" refers to any separately located system that may enable and/or provide access to one or more datasets of information.

As used herein, the term "dataset" refers to a collection of data, usually presented in tabular form. Each column may represent a particular variable. Each row may represent a given member of the dataset. Also, it may list values for fields for each of the variables, such as name, location, cost, owner, manufacturer, serial number, or the like. Non-tabular datasets can also take the form of marked up strings of characters, such as an XML file.

As used herein, the term "dataset template" refers to a data structure that defines fields for cost data from a dataset that is provided by one or more external data sources. Also, when one or more of the fields of the dataset template is populated with cost information from one or more external data sources, these fields may be normalized and subsequently mapped to other fields in a category template.

As used herein, the term "offering" refers to any service, product, or combination of service(s) and/or product(s) that may be provided by an enterprise.

As used herein, the term "category template" refers to a predetermined specification for organizing cost information for a plurality of categories. The plurality of categories may be generally arranged in a hierarchical manner. Allocation rules may be associated with one or more of the categories and they may be static, dynamic, and/or editable. When one or more of the categories are populated with cost information, the plurality of allocations rules defined in the category template may be employed to generate a model and provide a total cost value for an offering.

As used herein, the term "total cost value" refers to a value that is determined for providing at least one offering. A model for determining the total cost value of the at least one offering is based at least on an allocation of cost data to at least one category in a category template.

The following briefly describes the embodiments of the invention in order to provide a basic understanding of some aspects of the invention. This brief description is not intended as an extensive overview. It is not intended to identify key or critical elements, or to delineate or otherwise narrow the scope. Its purpose is merely to present some concepts in a simplified form as a prelude to the more detailed description that is presented later.

Briefly stated, various embodiments are directed towards determining a total cost for providing at least one offering. At least one dataset provided by at least one external data source is mapped to one or more fields in at least one dataset template. Further, the at least one dataset mapped to the at least one dataset template includes information related to providing at least one offering, such as cost data. At least one category template is employed to allocate the mapped dataset information to a plurality of categories. Also, each of the plurality of categories may be allocated a percentage of the mapped dataset information values, so that an allocation to each category relates to the providing of the at least one offering. Additionally, a total cost value is generated for providing the at least one offering and a model for determining the total cost value of the at least an offering based at least on the allocation to at least one category.

In at least one of the various embodiments, the model enables a display of a report that includes at least one sub-value associated with at least one of the category template's categories that are related to providing at least one offering. An aggregation of each sub value is employable for generating the total cost value of the at least one offering.

In at least one of the various embodiments, the model enables a display of a report that includes at least a portion of the dataset information that is employed to determine a sub-value associated with at least one of the category template categories that are related to providing the at least one offering. Also, at least a portion of the dataset information is editable.

In at least one of the various embodiments, the model further enables a display of a report that includes each percentage allocation associated with each category within the category template related to providing the offering, wherein at least one percentage allocation is editable. Also, in at least one of the various embodiments, at least one allocation is editable.

In at least one of the various embodiments, editing is provided for at least one dataset template or a category template. The editing may include at least one of removing, modifying, and adding at least one of a category or a field. Further, in at least one of the various embodiments, the category template is updateable based on editing at least one of the dataset template or the category template. Also, in at least one of the various embodiments, another total cost value may be generated for providing the at least one offering and another model for determining the total cost value of the at least an offering.

### Illustrative Operating Environment

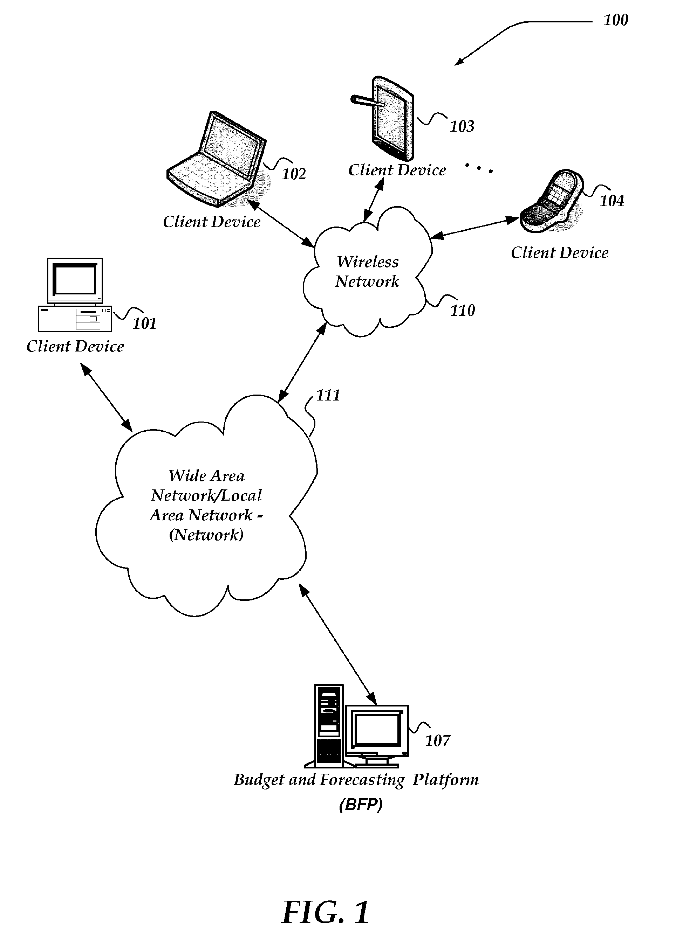

FIGURE 1 shows components of one embodiment of an environment in which at least one of the various embodiments may be practiced. Not all the of components may be required to practice various embodiments, and variations in the arrangement and type of the components may be made. As shown, system 100 of FIGURE 1 includes local area networks ("LANs") / wide area networks ("WANs") - (network) 111, wireless network 110, client devices 101-104, and Budget and Forecasting Platform (BFP) 107.

Generally, client devices 102-104 may include virtually any portable computing device capable of receiving and sending a message over a network, such as network 111, wireless network 110, or the like. Client devices 102-104 may also be described generally as client devices that are configured to be portable. Thus, client devices 102-104 may include virtually any portable computing device capable of connecting to another computing device and receiving information. Such devices include portable devices such as, cellular telephones, smart phones, display pagers, radio frequency (RF) devices, infrared (IR) devices, Personal Digital Assistants (PDA's), handheld computers, laptop computers, wearable computers, tablet computers, integrated devices combining one or more of the preceding devices, or the like. As such, client devices 102-104 typically range widely in terms of capabilities and features. For example, a cell phone may have a numeric keypad and a few lines of monochrome Liquid Crystal Display (LCD) on which only text may be displayed. In another example, a web-enabled mobile device may have a touch sensitive screen, a stylus, and several lines of color LCD in which both text and graphics may be displayed.

Client device 101 may include virtually any computing device capable of communicating over a network to send and receive information, including messaging, performing various online actions, or the like. The set of such devices may include devices that typically connect using a wired or wireless communications medium such as personal computers, tablet computers, multiprocessor systems, microprocessor-based or programmable consumer electronics, network Personal Computers (PCs), or the like. In at least one of the various embodiments, at least some of client devices 102-104 may operate over wired and/or wireless network. Today, many of these devices include a capability to access and/or otherwise communicate over a network such as network 111 and/or wireless network 110. Moreover, client devices 102-104 may access various computing applications, including a browser, or other web-based application.

In at least one of the various embodiments, one or more of client devices 101-104 may be configured to operate within a business or other entity to perform a variety of services for the business or other entity. For example, client devices 101-104 may be configured to operate as a web server, an accounting server, a production server, an email server, video game server, an inventory server, or the like. However, client devices 101-104 are not constrained to these services and may also be employed, for example, as an end-user computing node, in other embodiments. Further, it should be recognized that more or less client devices may be included within a system such as described herein, and embodiments are therefore not constrained by the number or type of client devices employed.

A web-enabled client device may include a browser application that is configured to receive and to send web pages, web-based messages, or the like. The browser application may be configured to receive and display graphics, text, multimedia, or the like, employing virtually any web-based language, including a wireless application protocol messages (WAP), or the like. In at least one of the various embodiments, the browser application is enabled to employ Handheld Device Markup Language (HDML), Wireless Markup Language (WML), WMLScript, JavaScript, Standard Generalized Markup Language (SGML), HyperText Markup Language (HTML), extensible Markup Language (XML), HTML5, or the like, to display and send a message. In at least one of the various embodiments, a user of the client device may employ the browser application to perform various actions over a network.

Client devices 101-104 also may include at least one other client application that is configured to receive and/or send data, including budgeting and forecasting information, between another computing device. Client applications may include a capability to provide requests and/or receive data relating to the cost models, budget reports, budget project information, or the like. The client application may provide data representing assignment and/or allocation changes, selecting templates, editing cost allocations between or among categories, or the like. In at least one of the various embodiments, client applications may receive and/or generate data related to budgeting and financial models and may generate tables and relationships between and among the data. In at least one of the various embodiments, client devices 101-104 may view and/or modify generated cost models.

Wireless network 110 is configured to couple client devices 102-104 and its components with network 111. Wireless network 110 may include any of a variety of wireless sub-networks that may further overlay stand-alone ad-hoc networks, or the like, to provide an infrastructure-oriented connection for client devices 102-104. Such sub-networks may include mesh networks, Wireless LAN (WLAN) networks, cellular networks, or the like.

Wireless network 110 may further include an autonomous system of terminals, gateways, routers, or the like connected by wireless radio links, or the like. These connectors may be configured to move freely and randomly and organize themselves arbitrarily, such that the topology of wireless network 110 may change rapidly.

Wireless network 110 may further employ a plurality of access technologies including 2nd (2G), 3rd (3G), 4th (4G), 5th (5G) generation radio access for cellular systems, WLAN, Wireless Router (WR) mesh, or the like. Access technologies such as 2G, 3G, 4G, 5G, and future access networks may enable wide area coverage for mobile devices, such as client devices 102-104 with various degrees of mobility. For example, wireless network 110 may enable a radio connection through a radio network access such as Global System for Mobil communication (GSM), General Packet Radio Services (GPRS), Enhanced Data GSM Environment (EDGE), Wideband Code Division Multiple Access (WCDMA), High Speed Downlink Packet Access (HSDPA), Long Term Evolution (LTE), or the like. In essence, wireless network 110 may include virtually any wireless communication mechanism by which information may travel between client devices 102-104 and another computing device, network, or the like.

Network 111 is configured to couple network devices with other computing devices, including, DPP 107, client device(s) 101, and through wireless network 110 to client devices 102-104. Network 111 is enabled to employ any form of computer readable media for communicating information from one electronic device to another. Also, network 111 can include the Internet in addition to local area networks (LANs), wide area networks (WANs), direct connections, such as through a universal serial bus (USB) port, other forms of computer-readable media, or any combination thereof. On an interconnected set of LANs, including those based on differing architectures and protocols, a router acts as a link between LANs, enabling messages to be sent from one to another. In addition, communication links within LANs typically include twisted wire pair or coaxial cable, while communication links between networks may utilize analog telephone lines, full or fractional dedicated digital lines including T1, T2, T3, and T4, Integrated Services Digital Networks (ISDNs), Digital Subscriber Lines (DSLs), wireless links including satellite links, or other communications links known to those skilled in the art. For example, various Internet Protocols (IP), Open Systems Interconnection (OSI) architectures, and/or other communication protocols, architectures, models, and/or standards, may also be employed within network 111 and wireless network 110. Furthermore, remote computers and other related electronic devices could be remotely connected to either LANs or WANs via a modem and temporary telephone link. In essence, network 111 includes any communication method by which information may travel between computing devices.

Additionally, communication media typically embodies computer-readable instructions, data structures, program modules, or other transport mechanism and includes any information delivery media. By way of example, communication media includes wired media such as twisted pair, coaxial cable, fiber optics, wave guides, and other wired media and wireless media such as acoustic, RF, infrared, and other wireless media. Such communication media is distinct from, however, processor-readable storage devices described in more detail below.

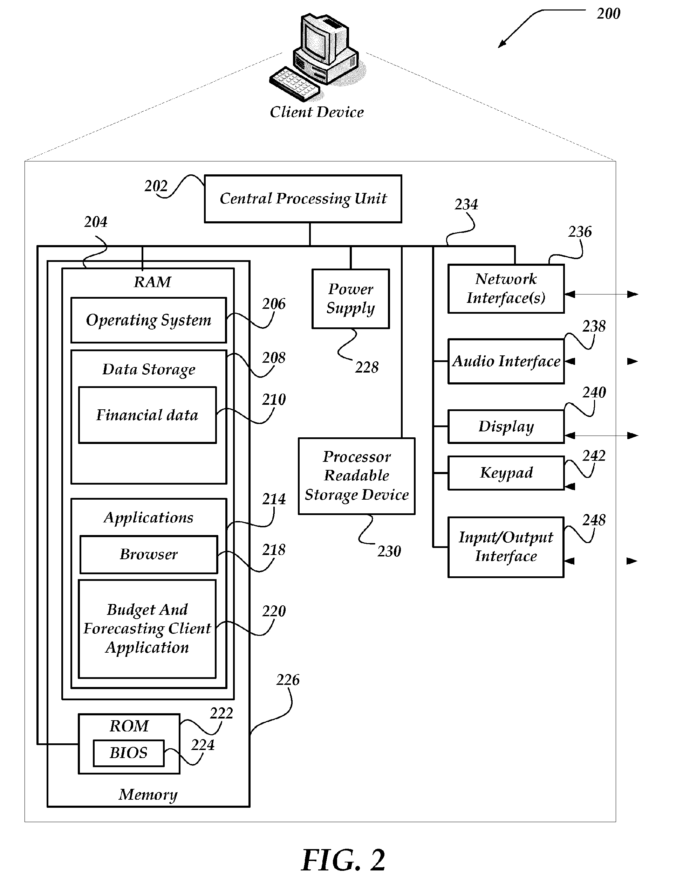

BFP 107 may include virtually any network device usable to perform data processing operation that may be used for generating cost models, cost allocations, total cost values for offerings, displays and/or reports thereof, such as network device 200 of FIGURE 2. In at least one of the various embodiments, BFP 107 employs various techniques to create, define, generate, and/or automated data processing applications such as budgeting and financial management applications. BFP 107 may include modules for generating data processing applications that may apply models that may include dataset templates, category templates, allocation rules, or the like. Furthermore, BFP 107 may include and/or generate data processing applications for visualizing the generated allocation categories, cost allocations, budgets, cost models, total cost values for offerings, or the like.

Devices that may operate as BFP 107 include various network devices, including, but not limited to personal computers, desktop computers, multiprocessor systems, microprocessor-based or programmable consumer electronics, network PCs, server devices, tablet computers, network appliances, or the like. It should be noted that while BFP 107 is illustrated as a single network device, the invention is not so limited. Thus, in another embodiment, BFP 107 may represent a plurality of network devices. For example, in at least one of the various embodiments, BFP 107 may be distributed over a plurality of network devices and/or implemented using cloud architecture.

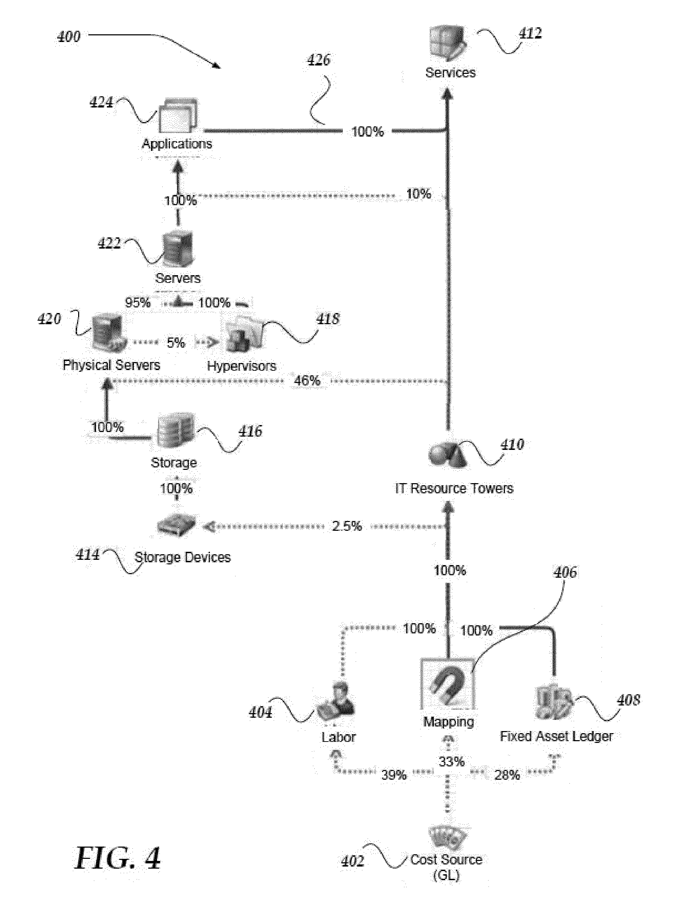

Moreover, BFP 107 is not limited to a particular configuration. Rather, BFP 107 may operate using a master/slave approach over a plurality of network devices, within a cluster, a peer-to-peer architecture, and/or any of a variety of other architectures. Thus, BFP 107 is not to be construed as being limited to a single environment, and other configurations, and architectures are also envisaged. BFP 107 may employ processes and such as described below in conjunction with FIGURES 4 and above to perform at least some of its actions.

### Illustrative Client Device

FIGURE 2 shows one embodiment of client device 200 that may be included in a system implementing at least one of the various embodiments. Client device 200 may include many more or less components than those shown in FIGURE 2. However, the components shown are sufficient to disclose an illustrative embodiment for practicing the present invention. Client device 200 may represent, for example, one embodiment of at least one of client devices 101-104 of FIGURE 1.

As shown in the figure, client device 200 includes a central processing unit ("CPU") 202 in communication with a mass memory 226 via a bus 234. Client device 200 also includes a power supply 228, one or more network interfaces 236, an audio interface 238, a display 240, a keypad 242, and an input/output interface 248. Power supply 228 provides power to client device 200. A rechargeable or non-rechargeable battery may be used to provide power. The power may also be provided by an external power source, such as an AC adapter or a powered docking cradle that supplements and/or recharges a battery.

Client device 200 may optionally communicate with a base station (not shown), or directly with another computing device. Network interface 236 includes circuitry for coupling client device 200 to one or more networks, and is constructed for use with one or more communication protocols and technologies including, but not limited to, global system for mobile communication ("GSM"), code division multiple access ("CDMA"), time division multiple access ("TDMA"), LTE, HSDPA, user datagram protocol ("UDP"), transmission control protocol/Internet protocol ("TCP/IP"), short message service ("SMS"), general packet radio service ("GPRS"), WAP, ultra wide band ("UWB"), IEEE 802.16 Worldwide Interoperability for Microwave Access ("WiMax"), session initiated protocol/real-time transport protocol ("SIP/RTP"), or any of a variety of other wireless communication protocols. Network interface 236 is sometimes known as a transceiver, transceiving device, or network interface card ("NIC").

Audio interface 238 may be arranged to produce and receive audio signals such as the sound of a human voice. For example, audio interface 238 may be coupled to a speaker and microphone (not shown) to enable telecommunication with others and/or generate an audio acknowledgement for some action. Display 240 may be a liquid crystal display ("LCD"), gas plasma, light emitting diode ("LED"), organic LED, electronic ink, or any other type of display used with a computing device. Display 240 may also include a touch sensitive screen arranged to receive input from an object such as a stylus or a digit from a human hand.

Keypad 242 may comprise any input device arranged to receive input from a user. For example, keypad 242 may include a push button numeric dial, or a keyboard. Keypad 242 may also include command buttons that are associated with selecting and sending images.

Client device 200 also comprises input/output interface 248 for communicating with external devices, such as a headset, or other input or output devices not shown in FIGURE 2. Input/output interface 248 can utilize one or more communication technologies, such as USB, infrared, Bluetooth™, or the like.

Mass memory 226 includes a Random Access Memory ("RAM") 204, a Read-only Memory ("ROM") 222, and other storage means. Mass memory 226 illustrates an example of computer readable storage media (devices) for storage of information such as computer readable instructions, data structures, program modules or other data. Mass memory 226 stores a basic input/output system ("BIOS") 224 for controlling low-level operation of client device 200. The mass memory also stores an operating system 206 for controlling the operation of client device 200. It will be appreciated that this component may include a general-purpose operating system such as a version of UNIX, or LINUX™, or a specialized client communication operating system such as Windows Mobile™, Google Android™, Apple iOS™, or the Symbian® operating system. The operating system may include, or interface with a Java virtual machine module that enables control of hardware components and/or operating system operations via Java application programs.

Mass memory 226 further includes one or more data storage 208, which can be utilized by client device 200 to store, among other things, applications 214 and/or other data. For example, data storage 208 may also be employed to store information that describes various capabilities of client device 200. The information may then be provided to another device based on a variety of events, including being sent as part of a header during a communication, sent upon request, or the like. At least a portion of the information may also be stored on a disk drive or other computer-readable storage device (not shown) within client device 200. Further, as illustrated, data storage 208 may also financial data 210. In some embodiments, financial data 210 may include a database, text, spreadsheet, folder, file, or the like, that may be configured to maintain and store various budget data, propagation rules, audit logs, dataset templates, category templates, datasets, or the like. Such financial data 210 may also be stored within any of a variety of other computer-readable storage devices, including, but not limited to a hard drive, a portable storage device, or the like, such as illustrated by non-transitory computer-readable storage device 230. In yet other embodiments, data storage 208 may also store data associated with cost models that may be generated in part by BFP 107.

Applications 214 may include computer executable instructions which, when executed by client device 200, transmit, receive, and/or otherwise process network data. Examples of application programs include, but are not limited to calendars, search programs, email clients, IM applications, SMS applications, voice over Internet Protocol ("VOIP") applications, contact managers, task managers, transcoders, database programs, word processing programs, security applications, spreadsheet programs, games, search programs, and so forth. Applications 214 may include, for example, browser 218 and budget and forecasting client application 220.

Browser 218 may include virtually any application configured to receive and display graphics, text, multimedia, and the like, employing virtually any web based language. In at least one of the various embodiments, the browser application is enabled to employ HDML, WML, WMLScript, JavaScript, SGML, HTML, XML, and the like, to display and send a message. However, any of a variety of other web-based languages may be employed. In one embodiment, browser 218 may enable a user of client device 200 to communicate with another network device, such as BFP 107 of FIGURE 1. In one embodiment, browser 218 may enable a user to view and/or manipulate generated cost models, budget projects, including creating budgets, modifying cost models, or the like.

In at least one of the various embodiments, a user may employ client device 200 to manage budgeting and finance applications, and to access information stored or otherwise managed through BFP 107. Also, in at least one of the various embodiments, the user may be enabled to perform a variety of actions on the data, including, queries, comparisons, summations, analysis, or the like. Additionally, in at least one of the various embodiments, a user may employ client 200 to automate one or more processes that may be used for generating business systems, cost models, budget projects, or the like. In at least one of the various embodiments, budget and forecasting client application 220 may be arranged to enable a user to rapidly generate business systems that include allocations rules, cost values, cost models, or the like. In at least one of the various embodiments, application 220 may be arranged to generate and render visualizations and display reports of allocation rules among cost categories in a cost model.

In any event, budget and forecasting client application 220 may employ processes similar to those described below and illustrated in FIGURES 4 and above to perform at least some of its actions.

### Illustrative Network Device

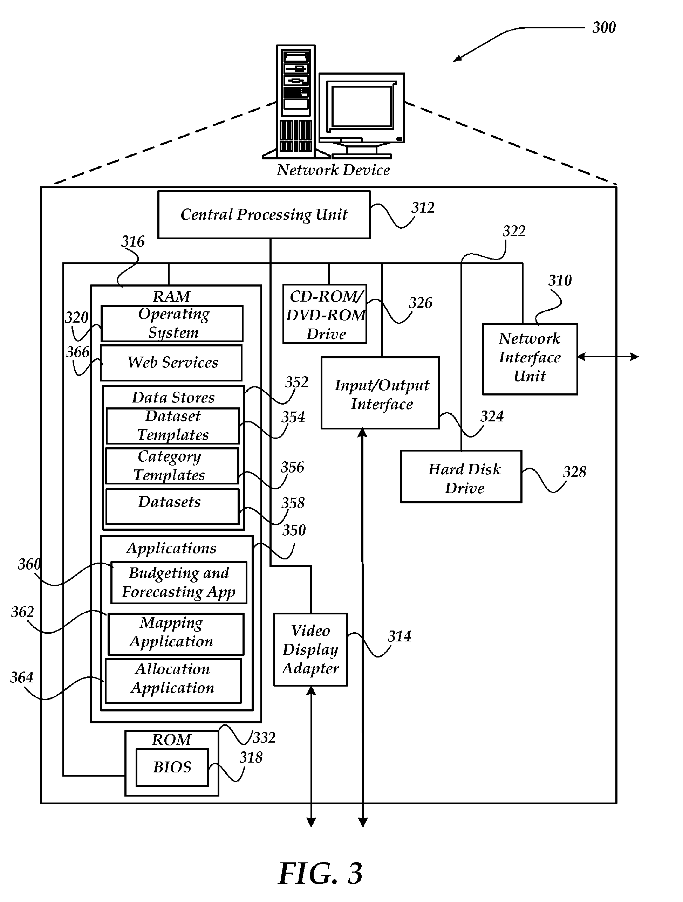

FIGURE 3 shows one embodiment of network device 300 that may be included in a system implementing at least one of the various embodiments. Network device 300 may include many more or less components than those shown. The components shown, however, are sufficient to disclose an illustrative embodiment for practicing the invention. Network device 300 may represent, for example, BFP 107 of FIGURE 1.

Network device 300 includes processing unit 312, video display adapter 314, and a mass memory, all in communication with each other via bus 322. The mass memory generally includes RAM 316, ROM 332, and one or more permanent mass storage devices, such as hard disk drive 328, tape drive, optical drive, flash drive, and/or floppy disk drive that may be coupled to a processor such as CPU 312. The mass memory stores operating system 320 for controlling the operation of network device 300. Any general-purpose operating system may be employed. Basic input/output system ("BIOS") 318 is also provided for controlling the low-level operation of network device 300. As illustrated in FIGURE 3, network device 300 also can communicate with the Internet, or some other communications network, via network interface unit 310, which is constructed for use with various communication protocols including the TCP/IP protocol. Network interface unit 310 is sometimes known as a transceiver, transceiving device, or network interface card (NIC). Network device 300 also includes input/output interface 324 for communicating with external devices, such as a headset, or other input or output devices not shown in FIGURE 3. Input/output interface 324 can utilize one or more communication technologies, such as USB, infrared, Bluetooth™, or the like.

The mass memory as described above illustrates another type of processor -readable storage media. Processor-readable storage media (devices) may include volatile, nonvolatile, removable, and non-removable media implemented in any method or technology for storage of information, such as computer readable instructions, data structures, program modules, or other data. Examples of computer readable storage media include RAM, ROM, Electronically Erasable Programmable Read-Only Memory (EEPROM), flash memory or other memory technology, Compact Disc Read-Only Memory (CD-ROM), digital versatile disks (DVD), Blu-Ray, or other optical storage, magnetic cassettes, magnetic tape, magnetic disk storage or other magnetic storage devices, or any other physical medium which can be used to store the desired information and which can be accessed by any computing device.

As shown, data stores 352 may include a database, text, spreadsheet, folder, file, or the like, that may be configured to maintain and store various cost models, budget data, audit logs, device data, such as, dataset templates 354, category templates 356, datasets 358, or the like. In at least one of the various embodiments, data stores 352 may further include program code, data, algorithms, or the like, for use by a processor, such as central processing unit (CPU) 312 to execute and perform actions. In at least one of the various embodiments, at least some of data and/or instructions stored in data stores 352 might also be stored on another device of network device 300, including, but not limited to cd-rom/dvd-rom 326, hard disk drive 328, or other computer-readable storage device resident on network device 300 or accessible by network device 300 over, for example, network interface unit 310.

The mass memory also stores program code and data. One or more applications 350 are loaded into mass memory and run on operating system 320. Examples of application programs may include transcoders, schedulers, calendars, database programs, word processing programs, Hypertext Transfer Protocol (HTTP) programs, customizable user interface programs, IPSec applications, encryption programs, security programs, SMS message servers, IM message servers, email servers, account managers, and so forth. Mass memory may also include dataset templates 354, web services 366, category templates 356, datasets 358, budget and forecasting application 360, mapping application 362, allocation application 364, or the like.

Web services 366 represent any of a variety of services that may be configured to provide content, over a network to another computing device. Thus, web services 366 include for example, a web server, a File Transfer Protocol (FTP) server, a database server, a content server, or the like. Web services 366 may provide the content over the network using any of a variety of formats, including, but not limited to WAP, HDML, WML, SGML, HTML, XML, compact HTML (cHTML), extensible (xHTML), or the like.

In at least one of the various embodiments, budget and forecasting application 360 may enable a user to generate budgets, cost models, total cost values for offerings, reports, or the like. In at least one of the various embodiments, mapping application 362 may enable automating of processes associated with the mapping datasets, such as, datasets 358, into dataset templates 354 and/or category templates 356.

Moreover, budget and forecasting application 360, mapping application 362, and/or allocation application 364 may employ processes, or parts of processes, similar to those described below and shown in FIGURE's 4 and above to perform at least some of its actions.

### Illustrative Logical System Architecture

FIGURES 4-7 are presented to illustrate various automated business system generation embodiments that may be enabled.

FIGURE 4 shows, for at least one of the various embodiments, model 400 that may have been generated using budget and forecasting platform 107. In at least one of the various embodiments, in this example, model 400 represents a business system starts with costs flowing from cost source 402, which may be a general ledger (GL) or other type of financial data. In this model, cost source 402 flows to labor 404, fixed asset 408, and to category mapping 406.

In at least one of the various embodiments, in model 400, labor 404 may be allocated 39% of costs, fixed assets 28% of costs, and the remaining 33% may be allocated to a mapping component In at least one of the various embodiments, based on a selected category template, the costs allocated to mapping component 406 may be allocated to the various cost categories that may make up the business system being modeled.

In at least one of the various embodiments, model 400 shows that 100% of costs flow to IT resource tower 410. From IT resource tower 410 costs flow to services 412. Thus, for this business system, model 400 shows that all the costs are allocated to producing the service offerings that the modeled business organization provides.

In at least one of the various embodiments, the cost management application may further enable users to gain additional understanding of how the costs from cost source 402 flow through the entire system. Model 400 shows that storage device 414 is responsible for 2.5% for the costs coming from cost source 402. And, that 100% of the costs of storage device 414 flows into the general category of for storage, shown by the allocation trace that shows of 100% of flowing from the storage device 414 to storage component 416. Likewise, model 400 shows that physical servers 420 are burdened by 100% of the costs of storage 416. And, since the business organization modeled by model 400 includes hypervisors that run on physical servers, the costs associate with hypervisor 418 flow from physical server 420. In at least one of the various embodiments, cost for the server category, servers 422 is constituted out of physical servers 420 and hypervisors 418, thus the costs for server 422 flow from those components. Further the applications 424 component of the model may be burdened with 100% of the costs associated with servers 422. Completing the loop, allocation rule 426 shows that service component 412 may be burdened with 100% of the costs associate with applications 424.

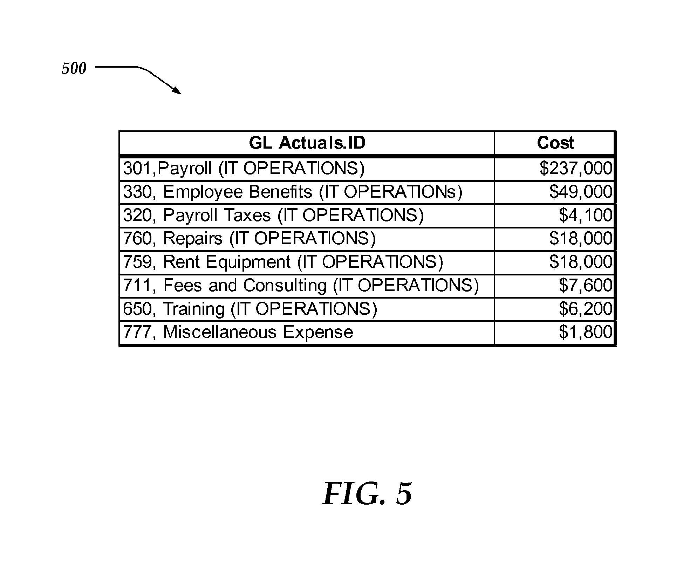

FIGURE 5 shows table 500 that may include information related to datasets that may be used by budget and forecasting platform 107 for generating business systems. In at least one of the various embodiments, table 500 shows an example of source cost data in the form of a dataset of General Ledger (GL) accounting records that may be provided by at least one external data source. In at least one of the various embodiments, a dataset may have more or less columns and detail as shown in table 500. In at least one of the various embodiments, dataset information such as shown in table 500 may be provided in various well-known formats and structures. For example, table 500 may be provided as one or more, XML files, comma separated files, directly from database tables, or the like. Also, in at least one of the various embodiments, datasets may be provided in non-standard formats (e.g., proprietary) where custom scripts and applications may be employed to extract and/or parse values from the datasets.

In at least one of the various embodiments, other types of raw datasets may be provided by other external data sources to budget and forecasting platform 107. For example, datasets that include information about physical IT assets, fixed assets, software licenses, employees, labor costs, insurance records, vendor costs, utility costs (electricity, water, sewer, broadband, natural gas, oil, or the like), consulting expenses, legal fees, or the like.

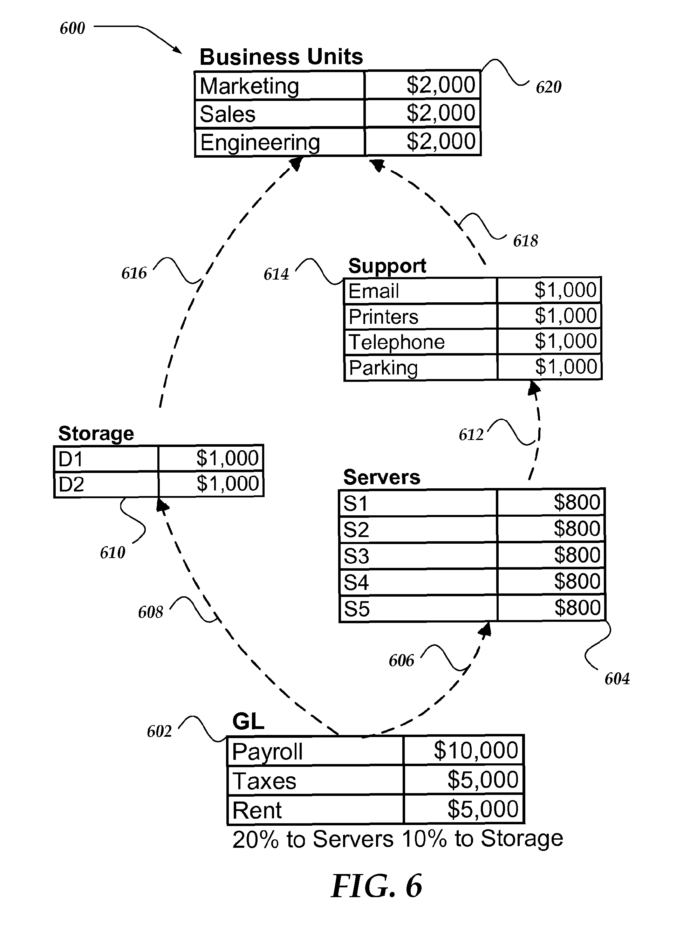

FIGURE 6 illustrates a logical architecture for model 600 that may be used to support additional descriptions of the systems and methods enabled by at least one of the various embodiments.

In at least one of the various embodiments, the model 600 may have five categories: GL 602, Servers 604, Storage 610, Support 612, and Business Units 616. In at least one of the various embodiments, each category contains a set of cost line items. For example, GL 602 includes cost line items for Payroll, Taxes and Rent. Likewise, Support 612 includes cost line items Email, Printers, Telephone, and Parking. In at least one of the various embodiments, each cost line item has one or more associated cost values. For example, Storage 610 has two cost line items, D1, and D2 (e.g., disk drives) having associated cost values of $1000 each.

Allocation rules may used to connect categories of model 600. In at least one of the various embodiments, allocation rules may show how costs (money) flow between the categories. Resulting in a graph where the categories may be represented as nodes and the allocation rules may be represented as edges. In at least one of the various embodiments, generally a model may be represented by a directed acyclic graph but that is not a requirement for an operative model. In at least one of the various embodiments, a model graph may contain cycles that are resolved or estimated using mathematical techniques, including but not limited to Gaussian elimination, Cholesky decomposition or Newton's method.

In at least one of the various embodiments, allocation rule 606 represents a rule allocating 20% of the money in category GL 602 to Servers category 604. In this example, GL 602 includes a total of $20,000, thus 20% of $20,000 (e.g., $4,000) flows to Servers 606. Likewise, allocation rule 608 may allocate $2,000 from GL 602 to Storage 610. The other allocation rules in model 600 allocate 100% of the money to the next category: allocation rule 610 directs 100% of the money (e.g., $4,000) to flow to Support 612; allocation rule 616 directs 100% of the money in Support (e.g., $4,000) to flow to Business Units 616; and allocation rule 614 directs 100% of the money from Storage 610 to flow to Business Units 618.

In at least one of the various embodiments, money that flows into the category may be allocated among the included cost line items. In at least one of the various embodiments, each category may have one or more rules that may describe the assignment ratios for how the money in a category may be assigned to cost line items. For the categories 604, 610, 612, and 618, simple rules assign the money in the category evenly among the cost line items. GL 602 may have different assignment ratios, in this non-limiting example, the assignment ratio between the cost line items may be 50% to Payroll, 25% to Taxes, and 25% to Rent.

In at least one of the various embodiments, an assignment ratio may represent how the money in an actual budget may be assigned to the actual cost line items. In at least one of the various embodiments, rules may be applied that distribute the money based on formulas that may be defined by the users or administrators who designed the model. In at least one of the various embodiments, the assignment ratios and allocations may be modified as part of the modeling process.

The model 600 is a simplified model useful for facilitating discussion and understanding of the embodiments, since allocation rules for models of large commercial entities can be numerous and complex. However, model 600 is at least sufficient to enable one of ordinary skill in the art to practice what is claimed herein.

In at least one of the various embodiments, the allocation rules, allocation ratios, category assignments, cost items assignments, may be determined automatically based on a selected category template. In at least one of the various embodiments, mapping application 362 may employ category templates, such as category templates 356 to determine how values from dataset may be placed in the model.

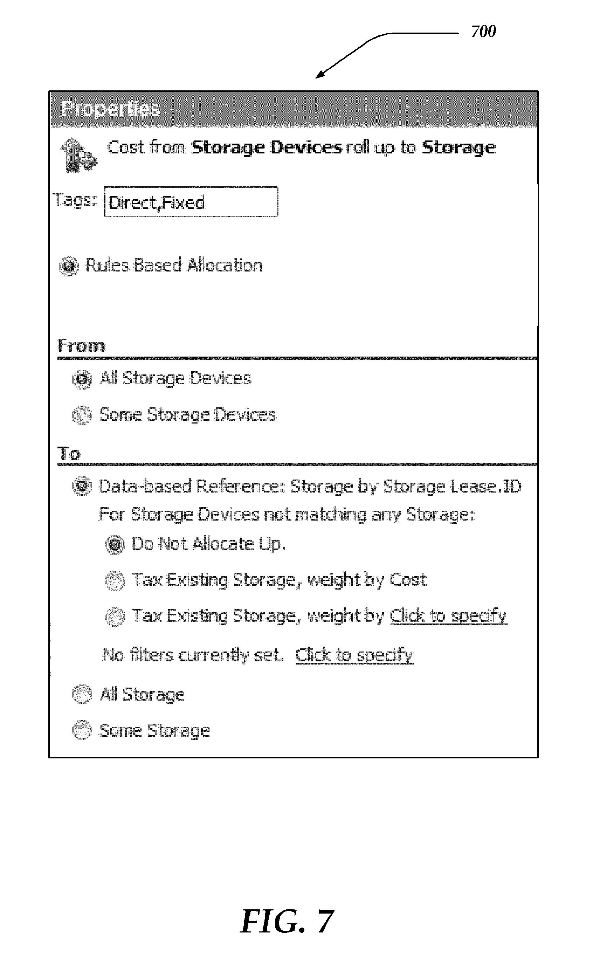

FIGURE 7 shows user-interface 700 for modifying allocations in accordance with at least one of the various embodiments. In at least one of the various embodiments, a dialog box, such as, user-interface 700 may be provided to enable users to modify the allocation assignments for a model. In at least one of the various embodiments, a automatically generated business system may include a model that has allocations that may be automatically generated based on a category template. In at least one of the various embodiments, users may be employ user-interface 700 to make modifications to the model, including allocations, to closer reflect how their underlying business organization may operate.

In at least one of the various embodiments, user-interfaces for adjusting the allocations rules and/or allocation assignments that may be associated with template used for automatically generating a business system may include more or fewer user interface elements that are shown in user-interface 700. In at least one of the various embodiments, inputs may be provided for directly entering allocation rules and allocation assignments that may override those provided by a model. For example, model 600 allocates 20% of costs from GL category 602 to Servers category 604 and 10% to Storage category 610. In at least one of the various embodiments, user-interface 700 may be arranged to enable a user to edit the allocation rules so that 50% from GL category 602 may be allocated to storage category 610 and 50% of costs may be allocated to Servers category 604.

In at least one of the various embodiments, if the allocation assignments for one part of the model may be changed, the change may automatically flow through the rest of the model based on the other allocation rules. For example, in model 600 if allocations from GL category 602 are split evenly with Storage category 610 and Servers category 604, the $10,000 allocated to Storage category 610 may be further automatically allocated to sub-values D1 and D2 such that each sub-value may be automatically allocated $5000.

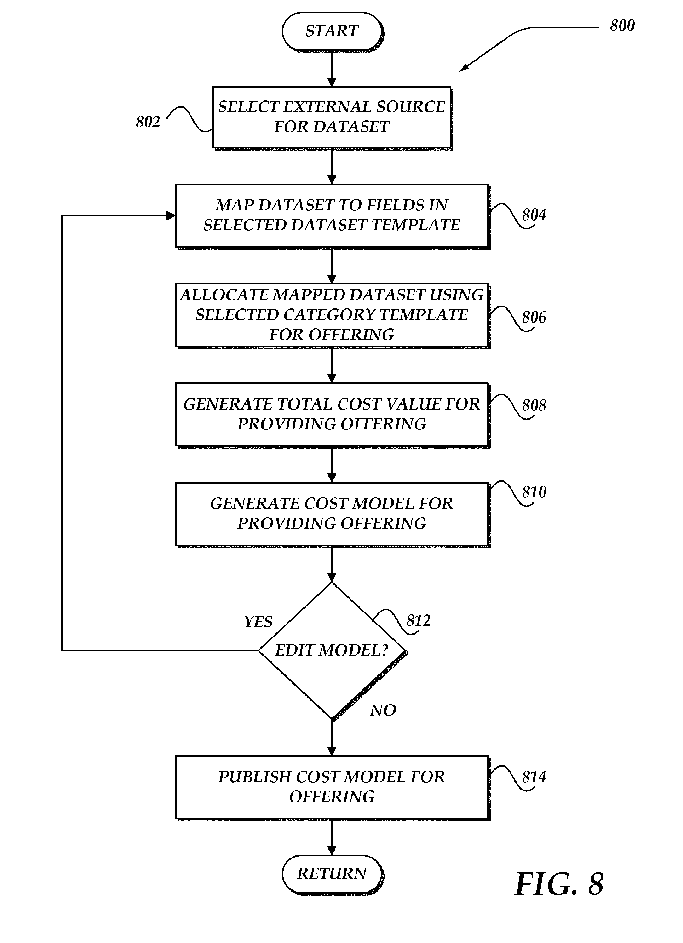

FIGURE 8 shows an overview flowchart for process 800 for automatically publishing a total cost value and a cost model for an offering by a system. Moving from a start block, the process advances to block 802 where at least one external source is selected to provide a dataset of information. At block 804, the dataset information is mapped to fields in a dataset template, which normalizes the information for subsequent processing by a selected category template for the offering.

Moving to block 806, the selected category template allocates the mapped dataset information to a plurality of categories. Each of the template's categories is allocated a percentage of the mapped and normalized dataset information, such as cost values. At block 808, a total cost value is generated for the offering based at least on the allocation to at least one of the categories. Further, at block 810, the model is generated for the offering based at least on the allocation to at least one of the categories.

Moving to decision block 812, a determination is made as to whether the cost model is edited. If affirmative, the process returns to block 804 and performs substantially the actions discussed above. However, if the determination at decision block 812 is false, the process flows to block 814 and at least the cost model for the offering is published. Next, the process returns to performing other actions.

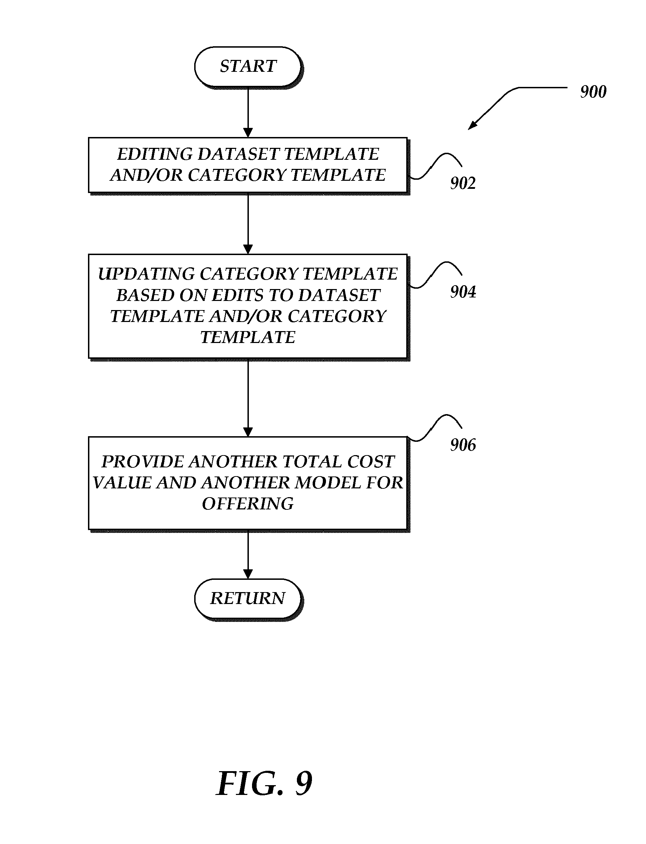

FIGURE 9 shows a flowchart for process 900 for mapping dataset fields to categories and allocating costs. Stepping from a start block, the process advances to block 902 where at least one of the dataset template and the category template is edited. At block 904, the allocations and/or the categories for the category template are updated based at least on the edits to the category template and/or the dataset template. At block 906, another total cost value and another cost model for the offering is provided based at least on the editing of at least one of the dataset template and/or the category template. Next, the process returns to performing other actions.

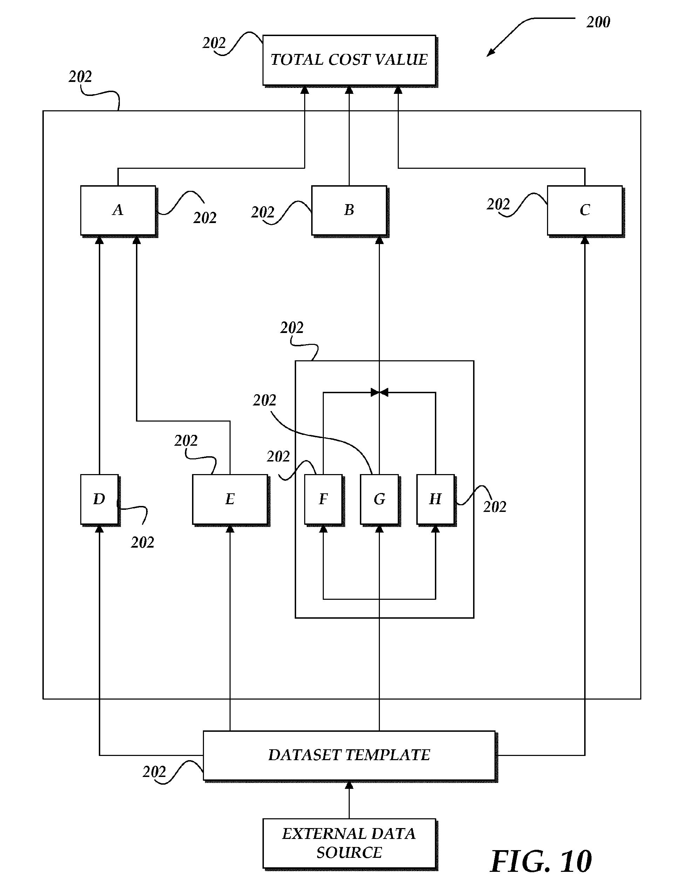

FIGURE 10 illustrates an overview of exemplary model 1000 for providing total cost value 1002 for an offering from a system, such as a business system. Data source 1006 provides a dataset to fields of dataset template 1006. At least some of the fields of dataset template 1006 normalize the provided dataset. Category template 1004 is arranged to map the normalized data in the fields of dataset template 1008 to a plurality of categories, including categories 1010, 1012, 1014, 1016, 1018, 1011, 1024, and 1026. Also, although not shown, each category includes an allocation rule so that allocated percentages of the normalized data set are distributed to the plurality of categories.

Additionally, some of the categories may be aggregated into other categories. For example, categories 1010 and1012 may be aggregated into summing category 1022. Also, as shown, categories 1014 and 1016 and 1018 may be aggregated together at block 1020 and then further allocated to summing category 1024. Further, as shown, some portion of the normalized dataset may be allocated directly to summing category 1026. The summing categories are then allocated by allocation rules to provide total cost value 1002.

Furthermore, although not shown, in at least one of the various embodiments, the model may be edited to include additional analysis, such as recommendations, simulations, and benchmarks. For example, historical information from other models and heuristics used by other anonymous systems providing the same offering may be employed at least in part to analyze and compare the current model and suggest changes to that model that may be less costly in providing a total cost value for an offering from the current system.

The following paragraphs set out further aspects and optional features of embodiments on the invention and may serve as basis for later amendment to the claims.

The model for determining the total cost value referred to in claim 13 below may further comprise enabling the second network device to enable further actions for displaying a report that includes each percentage allocation associated with each category within the category template related to providing the offering, wherein at least one percentage allocation is editable.

In the system set forth in claim 13 below the second network device may enable further actions for enabling at least one allocation to be editable.

In the system set forth in claim 13 below the second network device may enable further actions, comprising:
editing at least one of the at least one dataset template or the category template, wherein the editing includes at least one of removing, modifying, and adding for at least one of a category or a field;
updating the category template based on editing of at least one of the at least one dataset template or the category template; and
generating another total cost value for providing the at least one offering and another model for determining the total cost value of the at least an offering.

In another aspect the invention provides a processor readable non-transitive storage media that includes instructions for determining over a network a total cost for providing at least one offering, wherein a network device that executes at least a portion of the instructions enables actions, comprising:
mapping at least one dataset provided by at least one external data source to one or more fields in at least one dataset template, wherein the at least one dataset mapped to the at least one dataset template includes information related to providing at least one offering;
employing a category template to allocate the mapped dataset information to a plurality of categories, wherein each of the plurality of categories is allocated a percentage of the mapped dataset information values, wherein an allocation to each category relates to the providing of the at least one offering; and
generating a total cost value of providing the at least one offering and a model for determining the total cost value of the at least an offering based at least on the allocation to at least one category.

The model may further comprise enabling a display of a report that includes at least one sub-value associated with at least one of the category template categories that are related to providing the at least one offering, wherein an aggregation of each sub value is employable for generating the total cost value of the at least one offering.

The model may further comprise enabling a display of a report that includes at least a portion of the dataset information that is employed to determine a sub- value associated with at least one of the category template categories that are related to providing the at least one offering, wherein at least a portion of the dataset information is editable.

The model may further comprise enabling a display of a report that includes each percentage allocation associated with each category within the category template related to providing the offering, wherein at least one percentage allocation is editable.

The media may further comprise enabling at least one allocation to be editable.

The media may further comprise:
editing at least one of the at least one dataset template or the category template, wherein the editing includes at least one of removing, modifying, and adding for at least one of a category or a field;
updating the category template based on editing of at least one of the at least one dataset template or the category template; and
generating another total cost value for providing the at least one offering and another model for determining the total cost value of the at least an offering.

## Claims

1. A method for determining over a network a total cost for providing at least one offering, wherein the method is enabled by a network device that performs actions, comprising:
mapping at least one dataset provided by at least one external data source to one or more fields in at least one dataset template, wherein the at least one dataset mapped to the at least one dataset template includes information related to providing at least one offering;
employing a category template to allocate the mapped dataset information to a plurality of categories, wherein each of the plurality of categories is allocated a percentage of the mapped dataset information values, wherein an allocation to each category relates to the providing of the at least one offering; and
generating a total cost value of providing the at least one offering and a model for determining the total cost value of the at least an offering based at least on the allocation to at least one category.

2. The method of Claim 1, wherein the model further comprises enabling a display of a report that includes at least one sub-value associated with at least one of the category template categories that are related to providing the at least one offering, wherein an aggregation of each sub-value is employable for generating the total cost value of the at least one offering.

3. The method of Claim 1 or claim 2, wherein the model further comprises enabling a display of a report that includes at least a portion of the dataset information that is employed to determine a sub- value associated with at least one of the category template categories that are related to providing the at least one offering, wherein at least a portion of the dataset information is editable.

4. The method of any one of the preceding claims, wherein the model further comprises enabling a display of a report that includes each percentage allocation associated with each category within the category template related to providing the offering, wherein at least one percentage allocation is editable.

5. The method of any one of the preceding claims, further comprising enabling at least one allocation to be editable.

6. The method of any one of the preceding claims, further comprising:
editing at least one of the at least one dataset template or the category template, wherein the editing includes at least one of removing, modifying, and adding for at least one of a category or a field;
updating the category template based on editing of at least one of the at least one dataset template or the category template; and
generating another total cost value for providing the at least one offering and another model for determining the total cost value of the at least an offering.

7. A network device for determining over a network a total cost for providing at least one offering, comprising:
a transceiver for communicating over the network;
a memory for storing at least instructions;
a processor device that is operative to execute instructions that enable actions, including:
mapping at least one dataset provided by at least one external data source to one or more fields in at least one dataset template, wherein the at least one dataset mapped to the at least one dataset template includes information related to providing at least one offering;
employing a category template to allocate the mapped dataset information to a plurality of categories, wherein each of the plurality of categories is allocated a percentage of the mapped dataset information values, wherein an allocation to each category relates to the providing of the at least one offering; and
generating a total cost value of providing the at least one offering and a model for determining the total cost value of the at least an offering based at least on the allocation to at least one category.

8. The network device of Claim 7, wherein the model further comprises enabling a display of a report that includes at least one sub-value associated with at least one of the category template categories that are related to providing the at least one offering, wherein an aggregation of each sub value is employable for generating the total cost value of the at least one offering.

9. The network device of Claim 7 or claim 8, wherein the model further comprises enabling a display of a report that includes at least a portion of the dataset information that is employed to determine a sub- value associated with at least one of the category template categories that are related to providing the at least one offering, wherein at least a portion of the dataset information is editable.

10. The network device of any one of the preceding claims, wherein the model further comprises enabling a display of a report that includes each percentage allocation associated with each category within the category template related to providing the offering, wherein at least one percentage allocation is editable.

11. The network device of any one of the preceding claims, further comprising enabling at least one allocation to be editable.

12. The network device of any one of the preceding claims, further comprising:
editing at least one of the at least one dataset template or the category template, wherein the editing includes at least one of removing, modifying, and adding for at least one of a category or a field;
updating the category template based on editing of at least one of the at least one dataset template or the category template; and
generating another total cost value for providing the at least one offering and another model for determining the total cost value of the at least an offering.

13. A system for determining over a network the total cost for providing at least one offering, comprising:
a first network device, including:
a transceiver for communicating over the network;
a memory for storing at least instructions;
a processor device that is operative to execute instructions that enable actions, including:
enabling access to at least one external data source that includes at least one dataset; and
a second network device, including:
a transceiver for communicating over the network;
a memory for storing at least instructions;
a processor device that is operative to execute instructions that enable actions, including:
accessing the at least one external data source that includes the at least one dataset;
mapping the at least one dataset to one or more fields in at least one dataset template, wherein the at least one dataset mapped to the at least one dataset template includes information related to providing at least one offering;
employing a category template to allocate the mapped dataset information to a plurality of categories, wherein each of the plurality of categories is allocated a percentage of the mapped dataset information values, wherein an allocation to each category relates to the providing of the at least one offering; and
generating a total cost value of providing the at least one offering and a model for determining the total cost value of the at least an offering based at least on the allocation to at least one category.

14. The system of Claim 13, wherein the model further comprises enabling the second network device to perform further actions for displaying a report that includes at least one sub-value associated with at least one of the category template categories that are related to providing the at least one offering, wherein an aggregation of each sub value is employable for generating the total cost value of the at least one offering.

15. The system of Claim 13 or claim 14, wherein the model further comprises enabling the second network device to enable further actions for displaying a report that includes at least a portion of the dataset information that is employed to determine a sub-value associated with at least one of the category template categories that are related to providing the at least one offering, wherein at least a portion of the dataset information is editable.
